# EUROPÄISCHE PATENTSCHRIFT

(11) **EP 2 723 169 B1**
(45) Veröffentlichungstag und Bekanntmachung des Hinweises auf die Patenterteilung: **03.02.2016**
(21) Anmeldenummer: 12729589.7
(22) Anmeldetag: 21.06.2012
(51) Int. Cl.: A01N 25/16, A01N 25/24, A01N 25/34, A01N 47/40, A01N 51/00, A01P 7/04, E04B 1/72

(54) **MISCHUNGEN AUS TREIBMITTELHALTIGEN POLYMEREN, INSEKTIZIDEN UND WACHSEN**
MIXTURES OF POLYMERS, INSECTICIDES AND WAXES CONTAINING BLOWING AGENTS
MÉLANGES CONSTITUÉS DE POLYMÈRES COMPRENANT DES CARBURANTS GAZEUX, DES INSECTICIDES ET DES RÉSINES

(30) Priorität: 21.06.2011 US 201161499317 P; 11.10.2011 EP 11184694
(43) Veröffentlichungstag der Anmeldung: 30.04.2014
(73) Patentinhaber: LANXESS Deutschland GmbH, 50569 Köln (DE); Lanxess Corporation, Pittsburgh, PA 15275-1112 (US)
(72) Erfinder: UHR, Hermann, 51373 Leverkusen (DE); FINK, Cyndi, Coraopolis, Pennsylvania 15108 (US); UPADHYAY, Navnit Bhuleshwar, Presto, Pennsylvania 15142 (US)
(74) Vertreter: Wichmann, Birgid
(86) Internationale Anmeldenummer: PCT/EP2012/062002
(87) Internationale Veröffentlichungsnummer: WO 2012/175628

(56) Entgegenhaltungen:
- WO-A1-92/02574
- WO-A1-97/33472
- WO-A2-2009/080464
- DE-A1- 19 619 397
- US-B1- 6 228 902
- DATABASE WPI Week 200947 Thomson Scientific, London, GB; AN 2009-L30667 XP002670122, & JP 2009 149579 A (NIPPON SODA CO) 9. Juli 2009 (2009-07-09)
- DATABASE WPI Week 198848 Thomson Scientific, London, GB; AN 1988-341922 XP002670124, & JP 63 254143 A (IMAKITA T) 20. Oktober 1988 (1988-10-20) in der Anmeldung erwähnt
- DATABASE WPI Week 199816 Thomson Scientific, London, GB; AN 1998-175034 XP002670125, & JP 10 036549 A (SHINTO TORYO KK) 10. Februar 1998 (1998-02-10) in der Anmeldung erwähnt

## Beschreibung

Die vorliegende Erfindung betrifft Mischungen aus treibmittelhaltigen Polymeren, Wachs und Insektiziden, beschichtete Polymerpartikel, Methoden zur Herstellung von beschichteten Polymerpartikeln, die Verwendung dieser Teilchen bzw. Mischungen bei der Herstellung von Polymerschäumen, ihre Verwendung zum Schutz von Polymerschäumen gegen den Befall durch Insekten, vornehmlich Termiten, sowie aus den insektizidhaltigen Polymerschäumen hergestellte Werk- und Baustoffe.

Polymerschäume werden aufgrund ihrer hervorragenden Verarbeitungs- und Isoliereigenschaften zunehmend in der Bauindustrie eingesetzt. In bestimmten Regionen und bestimmten Klimazonen werden diese Schäume oder daraus hergestellte Baustoffe von tierischen Schädlingen, vor allem Termiten befallen. Insbesondere Termiten können diese Schäume und Baustoffe durch Fraß substanziell so weit schädigen, dass die Isolierwirkung und mechanische Stabilität der aus den Schäumen hergestellten Formkörper eingeschränkt wird. Vielfach schreiben daher gesetzliche Vorschriften einen insektiziden Schutz von Formteilen vor, die in bevorzugten Lebensräumen von Termiten verbaut werden.

Es ist bereits lange bekannt Polystyrolschäume oder Schäume anderer Polymere und hieraus hergestellte Baumaterialien durch den Einsatz insektentoxischer Verbindungen vor dem Befall, besonders durch Termiten zu schützen. Zudem existieren verschieden Verfahren zur Herstellung von insektizidhaltigen Polymerschäumen, insbesondere von insektizidhaltigen EPS (expanded Polystyrol)-Schäumen.

So sind beispielsweise aus der US 6033731 A und der JP 63152648 A Verfahren zur Einarbeitung von Insektiziden in die treibmittelhaltigen EPS Partikel bekannt. Ein weiteres Verfahren zur Herstellung insektizidhaltiger Polymerschäume bei dem die Insektizide vor dem Aufschäumen zunächst in die Polymerschmelze eingebracht werden, ist aus WO 2010/046379 bekannt. Aus der US 6080796 B ist ein Verfahren zur Herstellung von insektizidhaltigen Polymerschäumen bekannt, in denen die Insektizide zunächst mit den Monomeren, insbesondere mit Styrol vermischt werden, zu EPS-Granulaten polymerisiert und aufgeschäumt werden.

Nachteilig an den vorstehenden Verfahren ist, dass lediglich bei Verwendung vergleichsweise hoher Mengen an Insektiziden eine ausreichend wirksame Menge auf der Oberfläche der aufzuschäumenden Polymerpartikeln aufgebracht werden kann und dadurch Prozesswasserbelastungen entstehen, die den Einsatz weiterer Aufreinigungsverfahren bedingen. Daher sind diese Verfahren aus ökonomischen und aus ökotoxikologischen Gründen zum Einsatz in technischen Prozessen ungeeignet.

Weitere Verfahren zur Herstellung von insektizidhaltigen Polymerschäumen durch Imprägnierung der Polymerpartikeln mit einem Insektizid vor dem Aufschäumen sind aus der JP 63159451 A, US 2010/0016468 A und US 2008/0096991 A bekannt. Nachteilig an diesen Verfahren ist, dass die insektizidhaltigen Schichten nur begrenzt haltbar und verarbeitungsempfindlich sind.

Zudem sind Verfahren zur Herstellung von insektizidhaltigen Polymerschäumen durch Beschichtung eines EPS-Partikels mittels einer Mischung aus einem Insektizid und einem Harz als Adhesiv aus JP 10036549 A und JP 63254143 A bekannt. Ein weiteres Verfahren zur Herstellung von insektizidhaltigen Polymerschäumen, bei dem EPS-Partikel mit einer Mischung aus Glycerinestern und Bindern beschichtet werden ist aus der WO 2009/080723 bekannt. Aus der WO 2009/080464 ist ein Extrusionsverfahren zur Herstellung von durch Fipronil geschützten Polymerschäumen bekannt. Nachteilig an diesen vorgenannten Verfahren ist, dass die beschichteten EPS-Partikel zur Agglomeration neigen und daher nicht für die Herstellung sämtlicher Formteile aus Polymerschäumen geeignet sind. Zudem muss die Insektizid-Adhesiv Mischung versprüht werden, um eine gleichmäßige Verteilung an der Oberfläche der Polymerpartikel gewährleisten zu können, was beim Anwender zu weiterem technischen Aufwand führt. Daher ist dieses Verfahren nicht effizient in technischen Prozessen einzusetzen.

Die Aufgabe bestand also darin ein Verfahren zur Herstellung von insektizidhaltigen Polymerschäumen bereitzustellen, mit dem die Nachteile des Standes der Technik überwunden werden können und Polymerschäume effizient und unter Verwendung reduzierter Mengen an Insektiziden hergestellt werden können.

Es wurde jetzt überraschend gefunden, dass durch Verwendung der erfindungsgemäßen Mischungen hochwirksam geschützte, beschichtete Polymerpartikel und insektizidhaltige Polymerschäume effizient in technischen Prozessen hergestellt werden können.

Gegenstand der Erfindung sind daher Mischungen enthaltend mindestens ein treibmittelhaltiges Polymer, mindestens ein Insektizid und mindestens ein Wachs.

Die treibmittelhaltigen Polymere stellen Polymerpartikel dar, in denen die Treibmittel durch Erwärmen freigesetzt werden können und diese in gelöster Form oder verkapselt beinhalten.

Treibmittel im Sinne der Erfindung können anorganisch, organisch oder reaktiv sein. Anorganische Treibmittel umfassen Kohlendioxid, Stickstoff, Wasser, Helium, Luft oder Argon.

Bei den organischen Treibmitteln handelt es sich um aliphatische Kohlenwasserstoffe mit 1 bis 9 Kohlenstoffatomen und per- oder partiell halogenierte aliphatische Kohlenwasserstoffe mit 1 bis 4 Kohlenstoffatomen. Bevorzugt handelt es sich bei den aliphatischen Kohlenwasserstoffen um Methan, Ethan, Propan, n-Butan, iso-Buten, n-Pentan, iso-Pentan, und Neopentan.

Methan, Ethan, Propan, n-Butan, iso-Buten, n-Pentan, iso-Pentan, und Neopentan. Bei den vollständig und partiell halogenierten aliphatischen Kohlenwasserstoffen handelt es sich um Fluorkohlenstoffverbindungen, Chlorkohlenstoffverbindungen und Chlorfluorkohlenstoffverbindungen. Als halogenierte Treibmittel werden als Fluorkohlenstoffverbindungen bevorzugt Methylfluorid, Perfluoromethan, Ethylfluorid, Difluormethan, 1,1-Difluorethan, 1,1,1-Trifluorethan, 1,1,1,2-Tetrafluorethan, Pentafluorethan, Difluormethan, Perfluorethan, 2,2-Difluorpropan, 1,1,1-Trifluorpropan, Perfluorpropan, Difluorpropan, Difluorpropan, Perfluorbutan oder Perfluorcyclopentan eingesetzt. Bei den teilweise halogenierten Chlorkohlenstoffverbindungen und Chlorfluorkohlenstoffverbindungen handelt es sich bevorzugt um Methylchlorid, Methylenchlorid, Ethylchlorid, 1,1,1-Trichlorethan, Chlordifluormethan, 1,1-Dichlor-1-fluorethan, 1-Chlor-1,1-difluorethan, 1,1-Dichlor-2,2,2-trifluorethan und 1-Chlor-1,2,2,2-tetrafluorethan. Bei den vollständig halogenierten Chlorfluorkohlenwasserstoffverbindungen handelt es sich bevorzugt um Trichlormonofluormethan, Dichlordifluormethan, Trichlortrifluorethan, 1,1,1-Trifluorethan, Pentafluorethan, Dichlortetrafluorethan, Chlorheptafluorpropan und Dichlorhexafluorpropan.

Bei chemisch reaktiven Treibmitteln handelt es sich um Stoffe, die unter thermischer Belastung Gase abspalten. Hierbei handelt es sich bevorzugt um Azodicarbonsäurediamid, Azodiisobutyronitril, Benzolsulfonhydrazid, 4,4-Oxibenzolsulfonylsemicarbazid, p-Toluolsulfonylsemicarbazid, Bariumazodicarboxylat, N,N'-Dimethyl-N,N'-dinitrosotherephthalamid und Trihydrazinotriazin. Ein weiteres bevorzugtes Treibmittelgemisch umfasst 0 bis 100 Gew.-% Kohlendioxid, 0 bis 50 Gew.-% Wasser und 0 bis 75 Gew.-% eines Alkohols, beispielsweise Methanol oder Ethanol, eines Ketons oder Ethers.

Als Polymere können sämtliche Polymere eingesetzt werden die durch Treibmittel aufgeschäumt werden können, wie z.B. Polypropylen, Polyethylen, Polyester, wie insbesondere Polyethylenterephthalat, Polyurethan oder Polystyrol. Bevorzugt werden als Polymere Polystyrole eingesetzt. Im Sinne der Erfindung wird Polystyrol (PS) als Sammelbegriff für Homo- und Copolymere aus Styrol, anderen vinylaromatischen Monomeren und gegebenenfalls weiteren Comonomeren verwendet. Unter PS sind beispielsweise Standard-Polystyrol (General Purpose Polystyrene, GPPS), schlagzähes Polystyrol (High Impact Polystyrene, HIPS, enthaltend z.B. Polybutadien- oder Polyisoprenkautschuk), Styrol-Maleinsäure(anhydrid)-Polymerisate, Acrylnitril-Butadien-StyrolPolymerisate (ABS), Styrol-Acrylnitril-Polymerisate (SAN), α-Methylstyrol-Acrylnitril-Polymerisat (AMSAN), oder deren Mischungen, zu verstehen (Komponente K1). Bevorzugtes PS ist Standard-Polystyrol, d. h. ein Polystyrol mit einem molaren Styrolmonomerenanteil von mindestens 95 %. Weiterhin bevorzugtes PS ist α-Methylstyrol-Acrylnitril-Polymerisat (AMSAN).

Weiterhin umfasst PS auch Blends aus einem oder mehreren der vorgenannten Polymere (Komponente K1) mit einem oder mehreren thermoplastischen Polymeren (Komponente K2) wie zum Beispiel Polyphenylenethern (PPE), Polyamiden (PA), Polyolefinen, wie Polypropylen (PP) oder Polyethylen (PE), Polyacrylaten, wie Polymethylmethacrylat (PMMA), Polycarbonaten (PC), Polyestern, wie Polyethylenterephthalat (PET) oder Polybutylenterephthalat (PBT), Polyethersulfonen (PES), Polyetherketonen (PEK) oder Polyethersulfiden (PES).

Die treibmittelhaltigen Polymere können nach dem Fachmann bekannten Verfahren wie z.B. durch a) Suspensionspolymerisation eines Monomeren, z.B. Styrol in Gegenwart von Treibmitteln, wodurch unmittelbar treibmittelhaltige Polymerpartikel entstehen, b) Imprägnieren von treibmittelfreien Polymerpartikeln mit dem Treibmittel unter Druck in einer erhitzten Suspension, wobei das Treibmittel in die erweichten Partikel diffundiert (beim Abkühlen der Suspension unter Druck erhält man treibmittelhaltige Polymerpartikel) oder c) Einmischen des Treibmittels in eine Polymerschmelze mittels eines Extruders oder einer anderen Mischvorrichtung (die treibmittelhaltige Schmelze wird unter Druck ausgetragen und z.B. mittels Unterwasserdruckgranulierung zu Polymerpartikeln granuliert) hergestellt werden. Dieses Verfahren eignet sich insbesondere zur Herstellung von treibmittelhaltigen Polystyrolpartikeln (EPS-Partikeln).

Die treibmittelhaltigen Polymeren können neben dem Treibmittel zusätzlich weitere Zuschlagstoffe wie z.B. Farbstoffe, Bindemittel, Antistatika, Hydrophobierungsmittel, anorganische Füllstoffe, wie z.B. Kieselsäure und Flammschutzmittel enthalten.

Zudem können auch die erfindungsgemäßen Mischungen weitere Zuschlagstoffe wie z.B. Farbstoffe, Bindemittel, Antistatika, Hydrophobierungsmittel, anorganische Füllstoffe, wie z.B. Kieselsäure und Flammschutzmittel enthalten.

Es hat sich zudem gezeigt, dass insbesondere bei der Verwendung von Zuschlagstoffen bestehend aus Estern aus dreiwertigen Alkoholen und langkettiger Fettsäuren, insbesondere in Gegenwart von Glycerinestern, die erfindungsgemäßen Mischungen nicht eingesetzt werden können. Daher ist die Verwendung von Glycerinestern als Zuschlagstoff von der Erfindung ausgenommen.

Bei den Insektiziden handelt es sich um Thiamethoxam, Thiachloprid und Imidacloprid. Es ist ebenfalls möglich, diese Insektizide in Mischung mit weiteren Insektiziden einzusetzen. Häufig werden für diese Mischungen synergistische Effekte beobachtet.

Die jeweils zu den Common Name gehörigen Strukturen sind dem folgenden Link zu entnehmen: http://www.alanwood.net/pesticides/index.html

Besonders bevorzugt handelt es sich bei den weiteren Insektiziden um: Nicotin Rezeptor Agonisten / Antagonisten, wie Clothianidin, Dinotefuran, Imidadacloprid, Imidaclothiz, Thiamethoxam, Thiacloprid, Nintenpyram, Nithiazine, Acetamiprid oder Paichongding;
Pyrazole und Phenylpyrazole wie Chlorantraniliprole, Cyantraniliprole, Dimetilan, Isolan, Tebufenpyrad, Tolfenpyrad, Acetoprole, Ethiprole, Fipronil, Flufiprole, Pyraclofos, Pyrafluprole, Pyriprole, Hydramethylnon,
Wachstumsregulatoren aus den Klassen der Chitin Synthesehemmer, wie Benzoylharnstoffe: Bistrifluron, Chlorbenzuron, Chlorfluazuron, Dichlorbenzuron, Diflubenzuron, Flucofuron, Flucycloxuron, Flufenoxuron, Hexaflumuron, Lufenuron, Novaluron, Noviflumuron, Penfluron, Sulcofuron, Teflubenzuron oder Triflumuron,; Buprofezin, Diofenolan, Hexythiazox, Etoxazole, Chlofentazine; Ecdysone Antagonisten und Antagonisten wie Chromafenozide, Furan Tebufenozide Halofenozide, Methoxyfenoxide, Tebufenozide, Yishijing, Azadirachtin; Juvenoide wie Dayoutong, Epofenonane, Fenoxycarb, Hydroprene, Kinoprene, Methoprene, Pyriproxyfen, Triprene; Lipid Biosynthesehemmer wie Spirodiclofen, Spiromesifen, Spirotetramat;
Organo(thio)phosphate wie Acephate, Azamethiphos, Azinphos-methyl, Chlorpyrifos, Chlorpyrifosmethyl, Chlorfenvinphos, Diazinon, Dichlorvos, Dicrotophos, Dimethoate, Disulfoton, Ethion, Fenitrothion, Fenthion, Isofenphos, Isoxathion, Malathion, Methami- dophos, Methidathion, Methylparathion, Mevinphos, Monocrotophos, Oxydemeton- methyl, Paraoxon, Parathion, Phenthoate, Phosalone, Phosmet, Phosphamidon, Pho- rate, Phoxim, Pirimiphos-methyl, Profenofos, Prothiofos, Sulprophos, Tetrachlor- vinphos, Terbufos, Triazophos, Trichlorfon;
Carbamate wie Alanycarb, Aldicarb, Bendiocarb, Benfuracarb, Carbaryl, Carbofuran, Carbosulfan, Fenoxycarb, Furathiocarb, Methiocarb, Methomyl, Oxamyl, Phenoxycarb, Pirimicarb,
Pyrethroide wie Allethrin, Bifenthrin, Cyfluthrin, Cyhalothrin, Cyphenothrin, Cypermethrin, alpha-Cypermethrin, beta-Cypermethrin, zeta-Cypermethrin, Deltamethrin, Esfenvalerate, Etofenprox, Fenpropathrin, Fenvalerate, Imiprothrin, lambda- Cyhalothrin, Permethrin, Prallethrin, Pyrethrin I und II, Resmethrin, Silafluofen, tau-Fluvalinate, Tefluthrin, Tetramethrin, Tralomethrin, Transfluthrin, Profluthrin, Dimefluthrin, Imiprothrin, Phenothrin, Empenthrin, Esbiothrin;
GABA Antagonisten wie Endosulfan, Pyrafluprole, Pyriprole;
Makrocyclische Lacton Insektizide wie Abamectin, Emamectin, Milbemectin, Lepimec- tin, Spinosad;
Site-I-Elektronentransportinhibitoren wie Fenazaquin, Fenpyroximate Pyrimidifen, Pyridaben, Tebufenpyrad, Tolfenpyrad, Flufenerim, Hydramethylnon, Dicofol;
Site-Il- und Site-Ill-Elektronentransportinhibitoren wie Acequinocyl, Fluacyprim, Rotenone;
Oxidative Phosphorylierung hemmende Verbindungen oder Entkoppler, wie Cyhexatin, Diafenthiuron, Fenbutatin Oxid, Tralopyril, Chlorphenapyr, Propargite;
Inhibitoren der Chitinbiosynthese wie Cyromazine;
Oxidase Inhibitoren, wie Piperonyl Butoxide (PBO);
Natrium-Kanal-Modulatoren, wie Indoxacarb, Metaflumizone;
weitere Wirkstoffe, wie Amidoflumet, Benclothiaz, Bifenazate, Borate, Cartap, Chlorantraniliprole, Flonicamid, Pyridalyl, Pymetrozine, Thiocyclam, Flubendiamide, Cyenopyrafen, Cyflumetofen, Flupyrazofos;

Ganz besonders bevorzugt handelt es sich bei den Insektiziden um:
Thiametoxam, Nintenpyram,, Thiacloprid, Imidacloprid, Fipronil, Chlorphenapyr, Hydramethylnon, Flufenoxuron, Triflumuron, Phenoxycarb, Tralopyril, Cyfluthrin, Deltamethrin, Permethrin, Transfluthrin, Diflubenzuron, Azamethiphos, Dichlorvos, Bendiocarb, Phenoxycarb, Cyhalothrin, Cyphenothrin, Cypermethrin, Prallethrin, Tetramethrin, Phenothrin, Empenthrin, Esbiothrin, Abamectin, Cyromazine, Pyriproxyfen, Esfenvalerat.

Die erfindungsgemäßen Formkörper und hieraus hergestellten Baumaterialien sind vor dem Befall mit Insekten geschützt. Besonders handelt es sich um beißende Insekten wie Schaben (z.B. Blatella germanica, Periplaneta americana, Blatta orientalis, Supella longipalpa), Käfer, wie z.B. Sitiophilus granarius, Tenebrio molitor, Dermestes lardarius, Stegobium paniceum, Anobium punctatum, Hylotrupes bajulus), Termiten wie z.B. Reticulitermes lucifugus, Reticulitermes flavipes, Reticulitermes virginicus, Reticulitermes hageni), Ameisen, wie Lasius niger, Monomorium pharaonis und Wespen wie z.B. Vespula germanica.

Ganz besonders bevorzugt ist der Schutz gegen alle üblichen Termitenarten, wie z.B. Reticulitermes lucifugus, Reticulitermes flavipes, Reticulitermes virginicus, Reticulitermes hageni, sowie die den Gattungen Coptotermes und Mastotermes zugeordneten Termitenarten.

Um die treibmittelhaltigen Polymere bzw. hieraus hergestellte Formkörper oder Baumaterialien zusätzlich vor dem Befall durch Schimmelpilze zu schützen, können die erfindungsgemäßen Mischungen auch zusätzlich Fungizide enthalten. Im allgemeinen können alle Fungizide eingesetzt werden, die eine Wirkung gegenüber den Schimmelpilzen haben.

Ganz besonders bevorzugt handelt es sich bei den Fungiziden um Azaconazol, Bromuconazol, Cyproconazol, Dichlobutrazol, Diniconazol, Hexaconazol, Metaconazol, Penconazol, Propiconazol, Tebuconazol, Azoxystrobin, Fludioxonil, Dichlofluanid, Tolylfluanid, Fluorfolpet, Methfuroxam, Carboxin, Fenpiclonil, Butenafin, Imazalil, N-Octylisothiazolin-3-on, Dichlor-N-octylisothiazolinon, Mercaptobenzthiazol, Thiocyanatomethyl-thiobenzothiazol, Thiabendazol, N-Butyl-benzisothiazolinon, 1-Hydroxy-2-pyridinthion (und ihre Cu-, Na-, Fe-, Mn-, Zn-Salze), Tetrachlor-4-methylsulfonylpyridin, 3-Iodo-2-propinyl-n-butylcarbamat, Bethoxazin, 2,4,5,6-Tetrachlorisophthalodinitril und Carbendazim.

Zur Verbesserung der Wirkung können gegebenenfalls jeweils auch Mischungen aus zwei oder mehreren der Fungizide eingesetzt werden.

Wird noch zusätzlich ein Fungizid eingesetzt, sind die treibmittelhaltigen Polymere, insbesondere die Polystyrole, oder die daraus hergestellten Formkörper oder Baustoffe zusätzlich noch geschützt gegenüber Schimmelpilzen und Basidiomyceten.

Es seien beispielsweise Mikroorganismen der folgenden Gattung genannt:
Alternaria, wie Alternaria tenuis,
Aspergillus, wie Aspergillus niger,
Chaetomium, wie Chaetomium globosum,
Coniophora, wie Coniophora puetana,
Lentinus, wie Lentinus tigrinus,
Penicillium, wie Penicillium glaucum,
Polyporus, wie Polyporus versicolor,
Aureobasidium, wie Aureobasidium pullulans,
Sclerophoma, wie Sclerophoma pityophila,
Trichoderma, wie Trichoderma viride.

Bei den Wachsen im Sinne der Erfindung kann es sich um alle natürlichen, chemisch modifizierten oder nicht modifizierten und um synthetische Wachse handeln.

Im allgemeinen sind die Wachse keine Reinstoffe, sondern teilweise hochkomplexe Mischungen aus unterschiedlichen Homologen, wie auch vom Typ her unterschiedlicher Strukturen.

Bevorzugt werden natürliche Wachse, wie Baumwollwachs, Carnaubawachs, Candelillawachs, Espartowachs, Guarumawachs, Japanwachs, Chinawachs, Korkwachs, Montanwachs, Paraffinwachse, Bayberry Wax, Ouricurywachs, Zuckerrohrwachs, Rizinuswachs, Sojawachs, Bienenwachs, Bürzeldrüsenfett, Wollwachs, Schellackwachs, Walrat, Mikrowachse, Ceresin oder Ozokerit. Bei den chemisch modifizierten Wachsen werden Hartwachse wie hydrierte Jojobawachse, Montanwachse und Sasolwachse eingesetzt. Synthetische Wachse stammen bevorzugt aus der Gruppe der Polyalkylenwachse, wie Polyolefinwachse, Polyethylenwachse, Fischer-Tropsch-Wachse, Polypropylenwachse oder aus den Gruppen der Polyethylenglycolwachse (Carbowaxe) und Amidwachse. Als Polyethylenglycole im Sinne der Erfindung eignen sich insbesondere Polyethylenglycole mit einer Molmasse zwischen 6000 und 60000 g/mol. Besonders bevorzugt werden Polyethylenwachse, Montanwachse, Paraffinwachs oder Polyethylenglycolwachse eingesetzt. Ganz besonders bevorzugt wird Paraffinwachs der CAS.-Nr. 8002-74-2 verwendet.

Zur Erreichung der gewünschten Eigenschaften können auch Mischungen der Wachse eingesetzt werden.

Die einsetzbaren Wachse zeichnen sich dadurch aus, dass sie bevorzugt eine Schmelztemperatur von 65 °C bis 150 °C, besonders bevorzugt haben die Wachse einen Schmelzpunkt von 80 °C bis 140 °C und ganz besonders bevorzugt haben die Wachse einen Schmelzpunkt von 85 °C bis 120 °C. Noch weiter bevorzugt weisen die Wachse einen Schmelzpunkt von 100 °C bis 120 °C auf.

Bevorzugt sind die Wachse in festem Zustand möglichst hart und wenn möglich auch spröde, in flüssigem Zustand soll ihre Viskosität bevorzugt gering sein.

Die Mischungen können z.B. 30 % bis 99 % treibmittelhaltiges Polymer, 0,001 % bis 0,3 % Insektizid und 0,1 % bis 30 % Wachs enthalten. Bevorzugt enthalten die Mischungen mindestens 50 % treibmittelhaltiges Polymer, mindestens 0,001 % bis 0,1 % Insektizid und mindestens 0,001 % bis 0,5 % Wachs.

Besonders bevorzugt sind Mischungen die mindestens ein treibmittelhaltiges Polymer aus der Reihe der Polystyrole, mindestens ein Insektizid und mindestens ein Wachs mit einer Schmelztemperatur von 65 °C bis 130 °C enthalten. Ganz besonders bevorzugt sind Mischungen die mindestens ein treibmittelhaltiges Polymer aus der Reihe der Polystyrole, mindestens ein Insektizid und mindestens ein Wachs mit einer Schmelztemperatur von 75 °C bis 130 °C enthalten.

Der Rahmen der Erfindung umfasst alle oben stehenden und im Folgenden aufgeführten, allgemeinen oder in Vorzugsbereichen genannten Parameter und Erläuterungen untereinander, also auch zwischen den jeweiligen Bereichen und Vorzugsbereichen in beliebiger Kombination.

Von der Erfindung ist ebenfalls ein Verfahren zur Herstellung eines mit einer insektizidhaltigen Schicht beschichteten Polymerpartikels umfasst, bei dem eine Mischung aus mindestens einem treibmittelhaltigen Polymeren und mindestens einem Insektizid und mindestens einem Wachs, bei mindestens einer Temperatur bei der das Wachs schmilzt, aufgeschäumt wird. Diese mit der insektizidhaltigen Schicht beschichteten treibmittelhaltigen Polymerpartikel werden erfindungsgemäß als beschichtete Polymerpartikel bezeichnet.

Erfindungsgemäß werden entweder Mischungen aus Insektizid und Wachsen eingesetzt und diese mit dem treibmittelhaltigen Polymeren vermischt oder die Insektizide werden zunächst in das Wachs eingearbeitet, gleichmäßig verteilt und dann mit dem treibmittelhaltigen Polymeren vermischt. Es kann allerdings ebenfalls eine Mischung aus Insektiziden und Wachsen vorgelegt werden und hierzu dann die treibmittelhaltigen Polymere hinzugegeben werden. Bevorzugt werden die treibmittelhaltigen Polymeren vorgelegt und die Mischungen aus Insektiziden und Wachsen hinzugegeben. Danach können die Mischungen dann gemeinsam durch Erwärmen aufgeschäumt werden.

Die Mischungen aus den Wachsen und den Insektiziden erhält man durch Mischen des Wirkstoffes mit einem Wachspulver nach den üblichen technischen Methoden, die eine gleichförmige Verteilung der zu mischenden Stoffe ermöglicht. Beispielhaft zu nennen sind hier Doppelwellenmischer, Chargenmischer, Trommelmischer, Paddelmischer, Schneckenbandmischer oder auch Wirbelschichtmischer.

Zur Einarbeitung der Insektizide und gegebenenfalls Fungizide in die Wachse können im Prinzip alle Methoden verwendet werden, die eine Einarbeitung ermöglichen. Hierbei kann man beispielsweise das Wachs schmelzen, die Wirkstoffe in das flüssige Wachs einarbeiten, z.B. durch Rühren und anschließend wieder verfestigen lassen. Hierbei kann das flüssige Wachs durch Düsen gedrückt werden und so in ein feines Pulver oder Granulat verwandelt werden. Man kann auch größer Wachsteilchen, z.B. auf einem Abschuppband erzeugen und dann auf mechanische Weise in die gewünschte Größe zerkleinern. Eine gute Methode der Durchmischung stellt die Extrusion dar. Technisch verwendet man hierzu Extruder, die meist als Schneckenextruder ausgelegt sind, aber auch Kolbenextruder sein können. Die Schneckenextruder können sowohl mit nur einer Welle als auch mit einer Doppelwelle ausgerüstet sein. Sie werden beispielsweise durch einen Einfülltrichter oder einer anderen Aufgabeeinrichtung mit der Mischung aus Wachs und Insektizid und gegebenenfalls Fungizid beschickt. Während die Schnecke die Feststoffmischung durch den Extruder transportiert, wird diese zunächst erwärmt und dann in der Schnecke bei der gewünschten Temperatur im Wesentlichen homogenisiert und plastifiziert. Anschließend wird das Extrudat über eine Düse zum Beispiel als Strang aus dem Extruder gepresst. Für die Extrudierung können sowohl Ein-, wie auch Mehrschneckenextruder eingesetzt werden.

Nach dem Extruder wird das Extrudat durch Düsen gedrückt und im allgemeinen in etwa gleich große Teilchen pelletiert.

Das Mengenverhältnis von Insektizid zu Wachs kann im allgemeinen beliebig gewählt werden und hängt von der Menge des eingesetzten treibmittelhaltigen Polymeren, sowie von der Menge des eingesetzten Wachs ab.

Im allgemeinen liegt das Mengenverhältnis von Insektizid zu Wachs zwischen 1 : 99 bis 80 : 20. Bevorzugt setzt man Insektizid und Wachs in einem Mengenverhältnis von 5 : 95 bis 70 : 30 ein und ganz besonders bevorzugt im Mengenverhältnis von 10 : 90 bis 50 : 50.

In der Anwendung kann die Insektizidmenge, bezogen auf das eingesetzte treibmittelhaltige Polymer ebenfalls in einem sehr breiten Bereich variiert werden. Neben regionalen Besonderheiten bezüglich Insektenpopulation spielt auch der Befallsdruck eine wesentliche Rolle, wie auch die insektizide Aktivität des Wirkstoffes. Bei einigen Wirkstoffen, wie beispielsweise auch den nikotinergen Agonisten und Antagonisten spielen auch repellierende Effekte eine Rolle und die eingesetzten Wirkstoffmengen können, wenn dieser Effekt ausreicht, nochmals deutlich reduziert werden.

Im Allgemeinen setzt man soviel der Mischung von Wachs und Insektizid oder Insektizid in Wachs ein, das bezogen auf das treibmittelhaltige Polymer 10 bis 3000 ppm Wirkstoff in der Mischung enthalten sind. Bevorzugt sind in der Mischung 20 bis 1500 ppm und ganz besonders bevorzugt 40 bis 1000 ppm bezogen auf das treibmittelhaltige Polymer enthalten. Der jeweilige Wert hängt aber stark von der Wirksamkeit ab und muss durch Versuche ermittelt werden.

Erfindungsgemäß können die Wachse und die Insektizide oder weitere Zuschlagstoffe an verschiedenen Stellen des Herstellprozesses der beschichteten Polymerpartikel zugegeben werden. Wichtig ist aber, dass sie vor oder während der Expansion des treibmittelhaltigen Polymeren zugegeben werden, um zu gewährleisten, dass das Wachs während dieses Prozesses schmilzt oder zumindest erweicht und somit haftfähiger wird. Im Allgemeinen kann dies so geschehen, dass die Wachse mit den Insektiziden und den treibmittelhaltigen Polymeren vermischt werden und dann die Mischung durch Temperaturerhöhung aufgeschäumt wird. Die Temperatur kann z.B. durch Erwärmung mittels Heizaggregat, Mikrowelle oder durch Zufuhr überhitzter Gase erhöht werden. Bevorzugt wird die Mischung aus treibmittelhaltigem Polymeren, Wachsen und Insektiziden mit Hilfe von überhitztem Wasserdampf aufgeschäumt. Dieser Prozess kann z.B. durch Abkühlung unterbrochen werden, wodurch vorexpandierte, beschichtete Polymerpartikel unterschiedlicher Partikelgrößen hergestellt werden können. Die Wachse und/oder die Insektizide können auch im Vorratsbehältnis für das treibmittelhaltige Polymer zugemischt werden oder durch spezielle Dosiereinheiten vor der Expansion zudosiert. Sie können auch mit den üblicherweise eingesetzten weiteren Zuschlagstoffen, wie z.B. Farbstoffen vermischt und ebenfalls vor dem Expandieren zudosiert werden. Die beschichteten Polymerpartikel können dann z.B. beim Anwender zu Formteilen aus Polymerschäumen aufgeschäumt werden oder direkt weiter zu Form- und Bauteilen aufgeschäumt werden. Die Wachse und die Insektizide können mit den treibmittelhaltigen Polymeren vermischt werden oder auch mit den vorexpandierten, treibmittelhaltigen Polymeren. Es können aber ebenfalls auch die vorexpandierten bzw. vorgeschäumten, treibmittelhaltigen, schon mit den erfindungsgemäßen Wachsen und Insektiziden beschichteten Polymere nochmals mit den Wachsen und Insektiziden vermischt und aufgeschäumt werden, so dass zweifach beschichtete Polymerpartikel entstehen.

In einem bevorzugten Prozess wird das EPS-Granulat zusammen mit einer Mischung aus Wachs und Insektizid dosiert. Die Mischung aus Wachs und Insektizid kann vorher z.B. durch die Verwendung geeigneter Mischer, wie z.B. eines Schaufelradmischer homogenisiert werden. Bevorzugt wird die Mischung homogenisert und dann in den Vorschäumer eingefüllt. Bevorzugt wird die Beschickung des Vorschäumer unter Rühren z.B. unter Verwendung eines Flügelblattrührer durchgeführt. Die Vorschäumung wird bevorzugt unter Verwendung von Wasserdampf durchgeführt. Der Wasserdampf weist bevorzugt eine Temperatur von 80°C - 130°C, besonders bevorzugt 100°C - 115°C und ganz besonders bevorzugt 100°C - 105°C auf. Die Dichte des Vorschaums beträgt hierbei 300% - 100%, bevorzugt 200% - 100% und ganz besonders bevorzugt 150% - 100% der Dichte des EPS-Formteils.

Nach dem Expandieren zeichnen sich die beschichteten Polymerpartikel dadurch aus, dass sie weitestgehend gleichmäßig Wachs und Insektizid, bzw. zusätzlich Fungizid auf der Oberfläche verteilt enthalten.

Von der Erfindung sind ebenfalls die beschichteten Polymerpartikel umfasst, die bei der Expansion der Mischungen aus mindestens einem treibmittelhaltigen Polymeren, mindestens einem Insektizid und mindestens einem Wachs hergestellt werden.

Um eine gleichmäßige Verteilung feststellen zu können, können den Wachs - Insektizid- Mischungen und Wachsen gegebenenfalls noch Farbstoffe zugesetzt werden, die eine spätere Verteilung sichtbar macht. Neben ohne Hilfsmittel sichtbaren Farben können auch spezielle Fluoreszenzfarbstoffe eingesetzt werden, die es ermöglichen eine Verteilung des Wachses, bzw. Wirkstoffes zu sehen ohne die beschichteten Polymerpartikel oberflächlich sichtbar zu färben.

Besonders bevorzugt sind beschichtete Polymerpartikel die als zu beschichtendes Polymerpartikel mindestens ein treibmittelhaltiges Polymer aus der Gruppe der Polystyrole enthalten und bei denen zur Beschichtung mindestens ein Wachs mit einer Schmelztemperatur von 65 °C bis 130 °C eingesetzt wurde. Ganz besonders bevorzugt sind beschichtete Polymerpartikel die als zu beschichtendes Polymerpartikel mindestens ein treibmittelhaltiges Polymer aus der Gruppe der Polystyrole enthalten und bei denen zur Beschichtung mindestens ein Wachs mit einer Schmelztemperatur von 75 °C bis 130 °C eingesetzt wurde. Ein treibmittelhaltiges Polymer aus der Gruppe der Polystyrole wird auch als EPS (expanded Polystyrol)-Partikel bezeichnet.

Von der Erfindung ist auch die Verwendung der beschichteten Polymerpartikel zur Herstellung von Polymerschäumen und Formteilen umfasst. Des Weiteren sind von der Erfindung Formteile, die aus den erfindungsgemäßen Mischungen oder den erfindungsgemäßen beschichteten Polymerpartikeln hergestellt werden, umfasst. Zudem sind ebenfalls die aus diesen Formteilen hergestellten Bauteilen von der Erfindung umfasst.

Aus den beschichteten Polymerpartikeln können nach bekannten, dem Fachmann geläufigen Methoden wie Expandieren und Verpressen Formkörper hergestellt werden. Hierbei handelt es sich um Isolierplatten etc.. Die Isolierplatten können auch Verbundsysteme mit weiteren Werkstoffen, wie Holz, Holzwerkstoffen oder Kunststoffen zum Erreichen einer besseren mechanischen Stabilität sein. Die Formkörper oder Isolierplatten zeichnen sich dadurch aus, dass sie hervorragend gegen den Fraß durch Insekten, insbesondere Termiten geschützt sind. Gleichzeitig stellen sie auch eine Barriere dar, die das Eindringen der Insekten in die Gebäude verhindert. Die Formkörper und Isolierplatten können sowohl unter-, wie auch oberirdisch verbaut werden. Formkörper die aus den beschichteten Polymerpartikel hergestellt wurden, können unterirdisch sogar in relativ feuchten Umgebungen verwendet werden, ohne dass der Wirkstoff schnell in den Boden ausgewaschen wird. Daher ist von der Erfindung ebenfalls die Verwendung der erfindungsgemäßen Mischung oder der erfindungsgemäßen beschichteten Polymerpartikel zum Schutz von Polymerschäumen gegen Insekten, insbesondere gegen Termiten, umfasst.

Die beschichteten Polymerpartikel zeichnen sich dadurch aus, dass das Wachs und das Insektizid und gegebenenfalls zusätzliche Fungizide gleichmäßig über die Oberfläche verteilt sind. Des Weiteren ist die Schicht so fest auf der Oberfläche gebunden, dass bei Lagerung, Umfüllung und Verarbeitung der beschichteten Polymerpartikel die Schicht haften bleibt, beim Verpressen aber keinerlei Veränderungen der Eigenschaften zu beobachten sind. Zusätzlich findet keine Staubbelastung für den Verarbeiter statt, die bei Einsatz der reinen, pulverförmigen Insektizide häufig ein Problem darstellt. Des Weiteren wurde überraschend gefunden, dass die Prozesswasserbelastungen bei der Herstellung der EPS Partikel reduziert werden konnte und dadurch Kosten für weitere Reinigungsschritte entfallen und demzufolge die EPS Partikel auch ökotoxikologische Vorteile aufweisen.

Ein weiterer Vorteil der Erfindung ist der Schutz des oder der Wirkstoffe gegen Einflüsse, die zu einem Abbau der Wirkstoffe führen.

### Beispiele

### Beispiel 1

Es werden 10g Imidacloprid (Preventol TM) und 40g Luwax AF 29 Micropowder (BASF, Polyethylenwachs, Smp. 110-118°C) in einem Mixgefäß (Kinematica MB 550, Labormixer mit Schlagmesser) eingewogen und 2x für 30 sec bei mittlerer Drehzahl (8000 U/min) gemixt. Man erhält ein hellgelbes, feines und homogenes Pulver. Zur Feststellung der Homogenität wurden 3 Proben genommen und mittels HPLC untersucht:

| | |
|---|---|
| Probe 1 | 19,6 % |
| Probe 2 | 19,9 % |
| Probe 3 | 19,8 % |

### Beispiel 2

35 g Luwax AF 29 (BASF, Polyethylenwachs, Smp. 110-118°C) und 15 g Imidacloprid (Preventol TM) werden unter Rühren bei 140°C aufgeschmolzen. Man erhält eine zähflüssige, klare und goldgelbe Schmelze.

Die 140°C heiße Schmelze wird auf eine Alufolie gegeben und die Schmelze abkühlen gelassen. Man erhält einen caramelfarbenen Feststoff.

Die Masse wird dann mit Trockeneis abgekühlt und grob gemahlen (Kinematica MB 550, Labormixer mit Schlagmesser, 8000 U/min) : Ausbeute: 46,93 g:
Zur Feststellung der Homogenität wurden an 3 Stellen Proben entnommen und mittels HPLC der Gehalt an Imidacloprid bestimmt:

| | |
|---|---|
| Probe 1 | 30,4 % |
| Probe 2 | 30,1 % |
| Probe 3 | 30,4 % |

Die Partikel hatten eine Größe von ca. 100-300 µm (Mikroskopisch vermessen).

### Beispiel 3

35 g Luwax Al 3 Powder (BASF, homopolymeres Polyethylenwachs, Smp. 102 - 108°C) werden bei 140°C aufgeschmolzen. Es ergibt sich eine zähflüssige klare und farblose Schmelze. Hierzu gibt man unter Rühren innerhalb von 30 Min. portionsweise 15 g Imidacloprid (Preventol TM).

Die 140°C heiße goldgelbe Schmelze auf eine Alufolie gegeben und abkühlen gelassen.

Der caramel farbene Feststoff. Wird grob zerkleinert, mit Trockeneis abgekühlt und grob gemahlen (Kinematica MB 550, Labormixer mit Schlagmesser, 8000 U/min).

Partikel am Mikroskop vermessen 100-300 µm

### Ausbeute: 41,22 g

Zur Feststellung der Homogenität wurden an 3 Stellen Proben entnommen und mittels HPLC der Gehalt an Imidacloprid bestimmt:

| | |
|---|---|
| Probe 1: | 30,3 % |
| Probe 2: | 30,5 % |
| Probe 3: | 30,7 % |

### Beispiel 4

35 g Luwax E (BASF, Montanwachs, Smp. 75 - 85°C) werden bei 140°C aufgeschmolzen. Man erhält eine dünnflüssige, klare und farblose Schmelze. 15 g Imidacloprid werden anschließend portionsweise unter Rühren zugeben.

Die 140°C heiße, goldgelbe Schmelze wird auf eine Alufolie gegeben, ausgehärtet und abkühlen gelassen. Der caramel farbene Feststoff wird grob zerkleinert, mit Trockeneis abgekühlt und grob gemahlen (Kinematica MB 550, Labormixer mit Schlagmesser, 8000 U/min).

### Ausbeute: 46,93 g

Zur Feststellung der Homogenität wurden an 3 Stellen Proben entnommen und mittels HPLC der Gehalt an Imidacloprid bestimmt:

| | |
|---|---|
| Probe 1: | 30,8 % |
| Probe 2: | 30,8 % |
| Probe 3: | 30,7 % |

Partikelgrößen am Mikroskop vermessen: 100µm bis 300µm

### Beispiel 5

35 g PEG 35000 (Polyethylenglycol) werden bei 140°C aufgeschmolzen. Man erhält eine zähflüssige, klare und farblose Schmelze, zu der man unter Rühren innerhalb von 30 Min. portionsweise 15 g Imidacloprid (Preventol TM) gibt.

Die 140°C heiße goldgelbe Schmelze wird auf eine Alufolie gegeben und abkühlen gelassen.

Man erhält einen caramel farbenen Feststoff. Dieser wird mit Trockeneis abgekühlt und gemahlen (Kinematica MB 550, Labormixer mit Schlagmesser, 14000 U/min). Um ein anschließendes Verklumpen zu verhindern mischt man mit 1 % der pyrogenen Kieselsäure "Aerosil 200" (bezogen auf den Feststoffanteil). Man erhält 41,49 g eine krümeligen Feststoffes.

Zur Feststellung der Homogenität wurden an 3 Stellen Proben entnommen und mittels HPLC der Gehalt an Imidacloprid bestimmt:

| | |
|---|---|
| Probe 1: | 30,3 % |
| Probe 2: | 30,6 % |
| Probe 3: | 30,6 % |

Partikelgrößen am Mikroskop vermessen. 300 µm -500 µm

### Beispiel 6

10g Imidacloprid (Preventol TM) und 40g Luwax E (BASF, homopolymeres Polyethylenwachs, Smp. 75 - 85°C) werden in einem Mixgefäß (Kinematica MB 550, Labormixer mit Schlagmesser, 14000 U/min) eingewogen, mit Trockeneis gekühlt und miteinander vermischt. Man erhält ein homogenes Pulver.

Zur Prüfung, ob es bei Erschütterungen zur Entmischung kommt, füllt man in eine Flasche, schüttelt auf einem Schüttler für 10 Min. und entnimmt an drei Stellen des Gefäßes Proben, die mit HPLC auf ihren Imidaclopridanteil untersucht werden.

| | |
|---|---|
| Probe 1 (Oben): | 18,3 % |
| Probe 2 (Mitte): | 20,0 % |
| Probe 3 (Unten): | 19,1 % |

### Beispiel 7

10 g Imidacloprid (Preventol TM) und 40 g Luwax AI3 (BASF, Montanwachs, Smp. 102 - 108°C) werden in einem Mixgefäß (Kinematica MB 550, Labormixer mit Schlagmesser, 14000 U/min) eingewogen, mit Trockeneis gekühlt und miteinander vermischt. Man erhält ein homogenes Pulver.

Zur Prüfung, ob es bei Erschütterungen zu Entmischung kommt, füllt man in eine Flasche, schüttelt auf einem Schüttler für 10 Min. und entnimmt an drei Stellen des Gefäßes Proben, die mit HPLC auf ihren Imidaclopridanteil untersucht werden.

| | |
|---|---|
| Probe 1 (Oben): | 19,8 % |
| Probe 2 (Mitte): | 19,6 % |
| Probe 3 (Unten): | 19,5 % |

### Beispiel 8

880 g Imidacloprid (Preventol TM) werden zu einer auf 140°C erhitzten Schmelze von 1320 g Sasolwax 7040 (Sasol Wax GmbH, Paraffinwax CAS.-Nr. 8002-74-2; Smp. 68 - 72°C) portionsweise unter Rühren zugegeben. Die Schmelze wird auf Aluminiumfolie gegossen und erstarren gelassen. Die so erhaltene Wachsmasse wird zunächst grob zerkleinert und dann in einem Mixgefäß (Kinematica MB 550, Labormixer mit Schlagmesser, 14000 U/min) gegeben, mit Trockeneis gekühlt und zerkleinert. Man erhält 2137 g elfenbeinfarbenes Wachspulver. Die Teilchengröße beträgt, betrachtet unter dem Mikroskop, ca. 100 bis 200 µm

Zur Prüfung der Homogenität wurden an 5 Stellen Proben entnommen, die mit HPLC auf ihren Imidaclopridanteil untersucht wurden.

Probe 1: 40,0 %; Probe 2: 39,4 %; Probe 3: 39,4 %; Probe 4: 40,2 %; Probe 5: 40,9 %

### Beispiel 9

### Herstellung eines EPS-Blockformteils unter Verwendung von Imidacloprid

Zu 50 kg in der Vorwägeeinrichtung des Vorschäumers vorgelegtem EPS Granulat (Styropor^{®} BF 222) werden 3.25g Imidacloprid (Preventol^{®} TM) dosiert. Die so konfektionierte Ladung wird unter Rühren in den Vorschäumer überführt, worauf das EPS Granulat mit Wasserdampf (105°C) auf eine Dichte von 17.7 kg/m³ vorgeschäumt wird. Nach Abkühlung im Wirbelschichtbett wird das vorgeschäumte Produkt 24 Stunden bei Raumtemperatur gelagert. Das so erhaltene Material wird mit Wasserdampf (130 °C) in Block-Formen zu Blöcken mit einer Dichte von 15.05 kg/m³ geschäumt. Das beim Vorschäum- und Formgebungsprozess anfallende Kondenswasser (Prozesswasser) enthielt Imidacloprid in einer Konzentration von 1.9 mg/l.

### Beispiel 10

### Herstellung eines EPS-Blockformteils unter Verwendung von erfindungsgemäßer Imidacloprid / Wachs- Mischung

Zu 50 kg in der Vorwägeeinrichtung des Vorschäumers vorgelegtem EPS Granulat (Styropor^{®} BF 222) werden 8.13 g des unter Beispiel 8 erhaltenen Produktes dosiert. Die so konfektionierte Ladung wird unter Rühren in den Vorschäumer überführt, worauf das EPS Granulat mit Wasserdampf (105°C) auf eine Dichte von 17.7 kg/m³ vorgeschäumt wird. Nach Abkühlung im Wirbelschichtbett wird das vorgeschäumte Produkt 24 Stunden bei Raumtemperatur gelagert. Das so erhaltene Material wird mit Wasserdampf (130 °C) in Block-Formen zu Blöcken mit einer Dichte von 15.05 kg/m³ geschäumt. Das beim Vorschäum- und Formgebungsprozess anfallende Kondenswasser (Prozesswasser) enthielt Imidacloprid in einer Konzentration von 1.4 mg/l.

### Vergleichsbeispiel 9

### Herstellung eines EPS-Blockformteils unter Verwendung von Imidacloprid

Zu 50 kg in der Vorwägeeinrichtung des Vorschäumers vorgelegtem EPS Granulat (Styropor^{®} BF 222) werden 3.25g Imidacloprid (Preventol^{®} TM) dosiert. Die so konfektionierte Ladung wird unter Rühren in den Vorschäumer überführt, worauf das EPS Granulat mit Wasserdampf (105°C) auf eine Dichte von 17.7 kg/m³ vorgeschäumt wird. Nach Abkühlung im Wirbelschichtbett wird das vorgeschäumte Produkt 24 Stunden bei Raumtemperatur gelagert. Das so erhaltene Material wird mit Wasserdampf (130 °C) in Block-Formen zu Blöcken mit einer Dichte von 15.05 kg/m³ geschäumt. Das beim Vorschäum- und Formgebungsprozess anfallende Kondenswasser (Prozesswasser) enthielt Imidacloprid in einer Konzentration von 1.9 mg/l.

### Beispiel 10

### Herstellung eines EPS-Blockformteils unter Verwendung von erfindungsgemäßer Imidacloprid / Wachs- Mischung

Zu 50 kg in der Vorwägeeinrichtung des Vorschäumers vorgelegtem EPS Granulat (Styropor^{®} BF 222) werden 8.13 g des unter Beispiel 8 erhaltenen Produktes dosiert. Die so konfektionierte Ladung wird unter Rühren in den Vorschäumer überführt, worauf das EPS Granulat mit Wasserdampf (105°C) auf eine Dichte von 17.7 kg/m³ vorgeschäumt wird. Nach Abkühlung im Wirbelschichtbett wird das vorgeschäumte Produkt 24 Stunden bei Raumtemperatur gelagert. Das so erhaltene Material wird mit Wasserdampf (130 °C) in Block-Formen zu Blöcken mit einer Dichte von 15.05 kg/m³ geschäumt. Das beim Vorschäum- und Formgebungsprozess anfallende Kondenswasser (Prozesswasser) enthielt Imidacloprid in einer Konzentration von 1.4 mg/l.

## Patentansprüche

1. Mischungen enthaltend mindestens ein treibmittelhaltiges Polymer, mindestens ein Insektizid ausgewählt aus der Reihe Imidachloprid, Thiacloprid oder Thiamethoxam und mindestens ein Wachs.

2. Mischungen gemäß Anspruch 1, **dadurch gekennzeichnet, dass** mindestens eines der treibmittelhaltigen Polymeren ein treibmittelhaltiges Polystyrol ist.

3. Mischungen gemäß Anspruch 1 oder 2, **dadurch gekennzeichnet, dass** mindestens eines der eingesetzten Wachse ausgewählt ist aus der Gruppe Polyethylenwachse, Parafinwachse, Montanwachse, Sasolwachse oder Polyethylenglycolwachse.

4. Mischungen gemäß mindestens einem der Ansprüche 1 bis 3, **dadurch gekennzeichnet, dass** mindestens eines der eingesetzten Wachse einen Schmelzpunkt zwischen 65 °C und 150 °C aufweist.

5. Mischungen gemäß mindestens einem der Ansprüche 1 bis 4, **dadurch gekennzeichnet, dass** mindestens eines der eingesetzten Wachse einen Schmelzpunkt zwischen 75 °C und 150 °C aufweist.

6. Mischungen gemäß mindestens einem der Ansprüche 1 bis 5, **dadurch gekennzeichnet, dass** das Verhältnis von Insektizid zu Wachs 5 : 95 bis 70 : 20 beträgt.

7. Treibmittelhaltiges Polymerpartikel, beschichtet mit einer Mischung aus mindestens einem Wachs und mindestens einem Insektizid ausgewählt aus der Reihe Imidachloprid, Thiacloprid oder Thiamethoxam.

8. Verfahren zur Herstellung eines beschichteten Polymerpartikels gemäß Anspruch 7, **dadurch gekennzeichnet, dass** eine Mischung aus mindestens einem Insektizid Insektizid ausgewählt aus der Reihe Imidachloprid, Thiacloprid oder Thiamethoxam, mindestens einem Wachs und mindestens einem treibmittelhaltigen Polymeren, bei mindestens einer Temperatur, bei der das Wachs schmilzt unter Verwendung von überhitztem Wasserdampf, aufgeschäumt wird.

9. Verfahren gemäß Anspruch 8, **dadurch gekennzeichnet, dass** das Wachs eine Schmelztemperatur von 65°C bis 150 °C hat.

10. Verfahren gemäß Anspruch 9, **dadurch gekennzeichnet, dass** das Wachs eine Schmelztemperatur von 75°C bis 150 °C hat.

11. Verwendung von treibmittelhaltigen Polymerpartikeln gemäß Anspruch 7 zur Herstellung von Polymersschäumen.

12. Verwendungen von Mischungen gemäß einem oder mehreren der Ansprüche 1 bis .6 zur Herstellung von Polymersschäumen.

13. Formkörper enthaltend Polymerpartikel gemäß Anspruch 7.

14. Formkörper enthaltend eine Mischung gemäß einem oder mehreren der Ansprüche 1 bis 6.

15. Baustoffe und Isoliermaterialien enthaltend Formkörper gemäß Anspruch 13 oder 14.

## Claims

1. Mixtures comprising at least one blowing agent-containing polymer, at least one insecticide selected from the series of imidacloprid, thiacloprid or thiamethoxam, and at least one wax.

2. Mixtures according to Claim 1, **characterized in that** at least one of the blowing agent-containing polymers is a blowing agent-containing polystyrene.

3. Mixtures according to Claim 1 or 2, **characterized in that** at least one of the waxes used is selected from the group of polyethylene waxes, paraffin waxes, montan waxes, Sasol waxes, or polyethylene glycol waxes.

4. Mixtures according to at least one of Claims 1 to 3, **characterized in that** at least one of the waxes used has a melting point of between 65°C and 150°C.

5. Mixtures according to at least one of Claims 1 to 4, **characterized in that** at least one of the waxes used has a melting point of between 75°C and 150°C.

6. Mixtures according to at least one of Claims 1 to 5, **characterized in that** the ratio of insecticide to wax is 5:95 to 70:20.

7. Blowing agent-containing polymer particle coated with a mixture of at least one wax and at least one insecticide selected from the series of imidacloprid, thiacloprid or thiamethoxam.

8. Method for producing a coated polymer particle according to Claim 7, **characterized in that** a mixture of at least one insecticide selected from the series of imidacloprid, thiacloprid or thiamethoxam, at least one wax, and at least one blowing agent-containing polymer is foamed at least at a temperature at which the wax melts using superheated steam.

9. Method according to Claim 8, **characterized in that** the wax has a melting temperature of 65°C to 150°C.

10. Method according to Claim 9, **characterized in that** the wax has a melting temperature of 75°C to 150°C.

11. Use of blowing agent-containing polymer particles according to Claim 7 for producing polymer foams.

12. Use of mixtures according to one or more of Claims 1 to 6 for producing polymer foams.

13. Molding comprising polymer particle according to Claim 7.

14. Molding comprising a mixture according to one or more of Claims 1 to 6.

15. Building materials and insulation materials comprising molding according to Claim 13 or 14.

## Revendications

1. Mélanges contenant au moins un polymère contenant un agent gonflant, au moins un insecticide choisi dans la série imidaclopride, thiaclopude ou thiaméthoxame et au moins une cire.

2. Mélanges selon la revendication 1, **caractérisés en ce qu'**au moins un des polymères contenant un agent gonflant est un polystyrène contenant un agent gonflant.

3. Mélanges selon la revendication 1 ou 2, **caractérisés en ce qu'**au moins une des cires utilisées est choisie dans le groupe formé par les cires de polyéthylène, les cires de paraffine, les cires de montagne, les cires de sasol ou les cires de polyéthylèneglycol.

4. Mélanges selon au moins l'une quelconque des revendications 1 à 3, **caractérisés en ce qu'**au moins une des cires utilisées présente un point de fusion entre 65°C et 150°C.

5. Mélanges selon au moins l'une quelconque des revendications 1 à 4, **caractérisés en ce qu'**au moins une des cires utilisées présente un point de fusion entre 75°C et 150°C.

6. Mélanges selon au moins l'une quelconque des revendications 1 à 5, **caractérisés en ce que** le rapport d'insecticide à cire vaut 5:95 à 70:20.

7. Particules polymères contenant un agent gonflant, revêtues par un mélange constitué par au moins une cire et au moins un insecticide choisi dans la série imidaclopride, thiaclopride ou thiaméthoxame.

8. Procédé pour la préparation d'une particule polymère revêtue selon la revendication 7, **caractérisé en ce qu'**un mélange constitué par au moins un insecticide choisi dans la série imidaclopride, thiaclopride ou thiaméthoxame, au moins une cire et au moins un polymère contenant un agent gonflant est moussé à au moins une température à laquelle la cire fond par l'utilisation de vapeur d'eau surchauffée.

9. Procédé selon la revendication 8, **caractérisé en ce que** la cire présente une température de fusion de 65°C à 150°C.

10. Procédé selon la revendication 9, **caractérisé en ce que** la cire présente une température de fusion de 75°C à 150°C.

11. Utilisation de particules polymères contenant un agent gonflant selon la revendication 7 pour la préparation de mousses polymères.

12. Utilisation de mélanges selon l'une ou plusieurs des revendications 1 à 6 pour la préparation de mousses polymères.

13. Corps façonnés contenant des particules polymères selon la revendication 7.

14. Corps façonnés contenant un mélange selon l'une ou plusieurs des revendications 1 à 6.

15. Matériaux de construction et matériaux d'isolation contenant des corps façonnés selon la revendication 13 ou 14.
